# EUROPEAN PATENT APPLICATION

(11) **EP 2 244 010 A2**
(43) Date of publication of application: **27.10.2010**
(21) Application number: 09004560.0
(22) Date of filing: 30.03.2009
(51) Int. Cl.: F22B 1/28, F22B 1/00, A47J 27/04

(54) **Steam generator**

(30) Priority: 11.04.2008 IT BG20080023
(71) Applicant: NIRO-PLAN AG, 4663 Aarburg (CH)
(72) Inventor: Tiberi, Edmondo, 46040 Monzambano (MN) (IT); Cagliari, Alessandro, 37019 Peschiera del Garda (VR) (IT)
(74) Representative: Lemcke, Brommer & Partner

(57) **Abstract**

A steam generator comprising a boiler; a water reservoir; electric heating means for said water; electric powering means for said heating means; and delivery means for said steam; characterised in that said electric powering means comprise a connector arranged such that it can be removably connected to the electricity supply, said delivery means for said steam comprising a connector arranged such that it can be removably connected to means using said steam; all such that said steam generator is completely removable.

## Description

The present invention relates to a steam generator for use in cooking or heating food in a domestic cooker.

All such cookers comprise at least one food cooking oven heated electrically or by gas.

The use of steam cooking has been expanding for many years.

Steam cooking is considered the most healthy and dietetic system. In this method the food is cooked by the moist heat of the water, while preventing direct contact between the food and the water itself.

The food cooks at relatively low temperatures, less than 100°C, hence vitamin and mineral losses are very low, with the food maintaining its taste and aroma virtually unaltered.

Finally, steam cooking enables the use of condiments to be avoided or limited to a minimum, and which in any case do not cook, the preparations hence being much lighter and digestible.

Various arrangements are currently available commercially for steam cooking, however these are not perfectly integrated or flexible, and incorporate various compromises: for example steamers incorporated into the kitchen worktop or small electrical domestic appliances limited to this specific use.

Built-in ovens dedicated to steam cooking are also available, with arrangements being also available combining steam cooking with certain traditional functions, these being subject to numerous compromises in terms of useful volume and functionality. The user is hence in the position at the time of purchase of having to decide whether to consider or reject the utility of steam when subjected to such compromises plus the greater cost of the oven, or indeed to purchase two separate ovens possibly of different dimensions.

An object of the present invention is to provide a modular steam generator which can be connected to various user devices comprising a cooking oven.

Another object of the invention is to provide a steam generator of simple manufacture.

These and other objects are attained, according to the present invention, by a steam generator comprising a boiler; a water reservoir; electric heating means for said water; electric powering means for said heating means; delivery means for said steam; **characterised in that** said electric powering means comprise a connector arranged such that it can be removably connected to the electricity supply, said delivery means for said steam comprising a connector arranged such that it can be removably connected to means using said steam; all such that said steam generator is completely removable.

These objects are also attained by a traditional oven adapted to receive at any moment a steam generator in accordance with claim 1.

Further characteristics of the invention are described in the dependent claims.

The characteristics and advantages of the present invention will be apparent from the ensuing detailed description of one embodiment thereof, illustrated by way of non-limiting example in the accompanying drawings, in which:

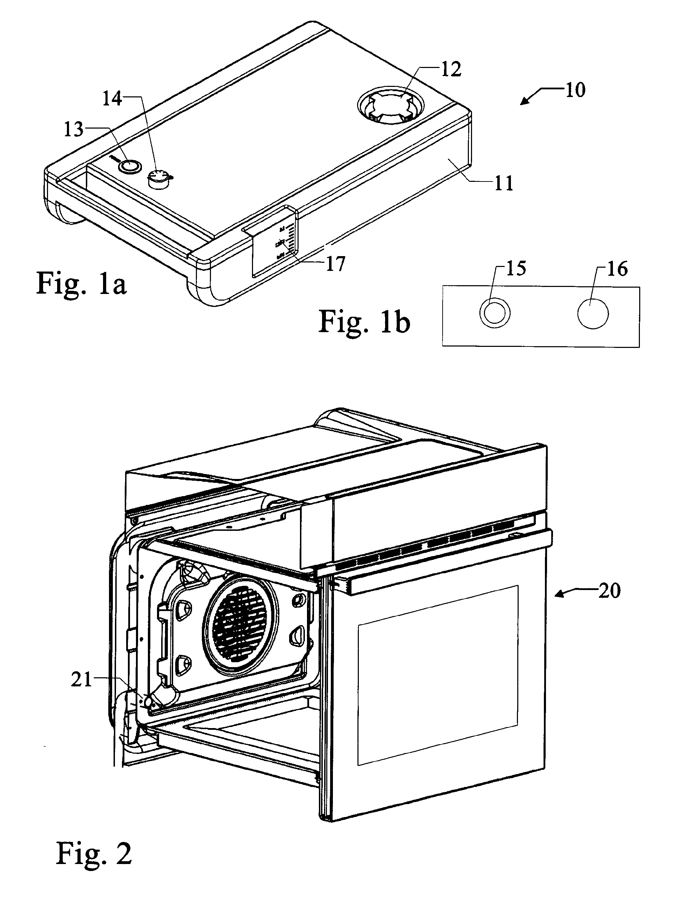

Figure 1a shows a steam generator in accordance with the present invention, with Figure 1b showing the generator rear;
Figure 2 shows an oven suitable for use with a steam generator of the present invention;

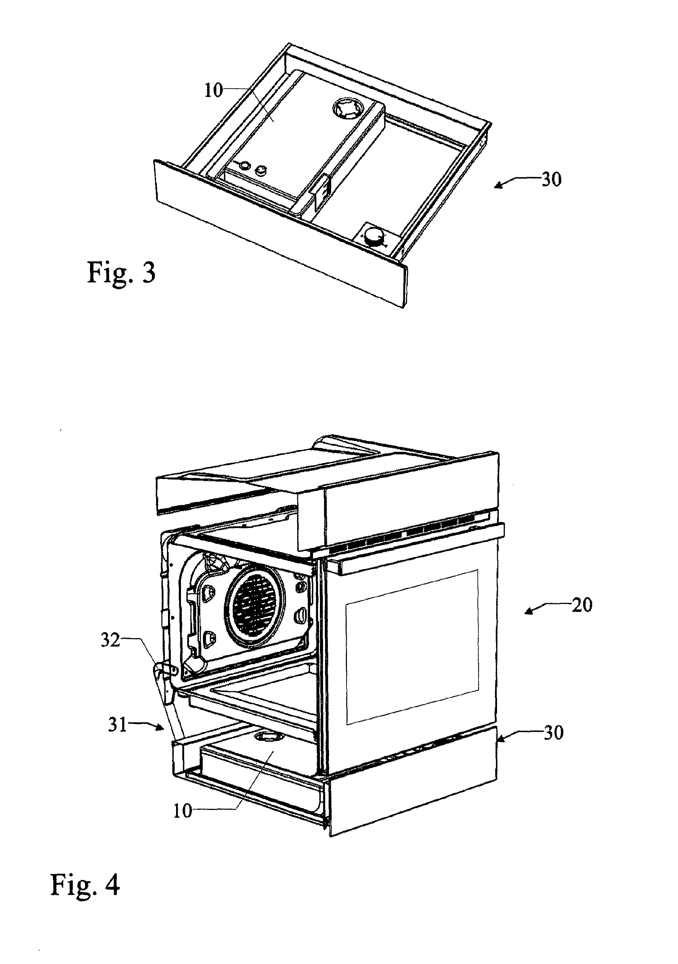

Figure 3 shows an accessory drawer comprising a steam generator in accordance with the present invention;
Figure 4 shows an oven and a steam generator positioned in a drawer at the oven, according to the present invention;

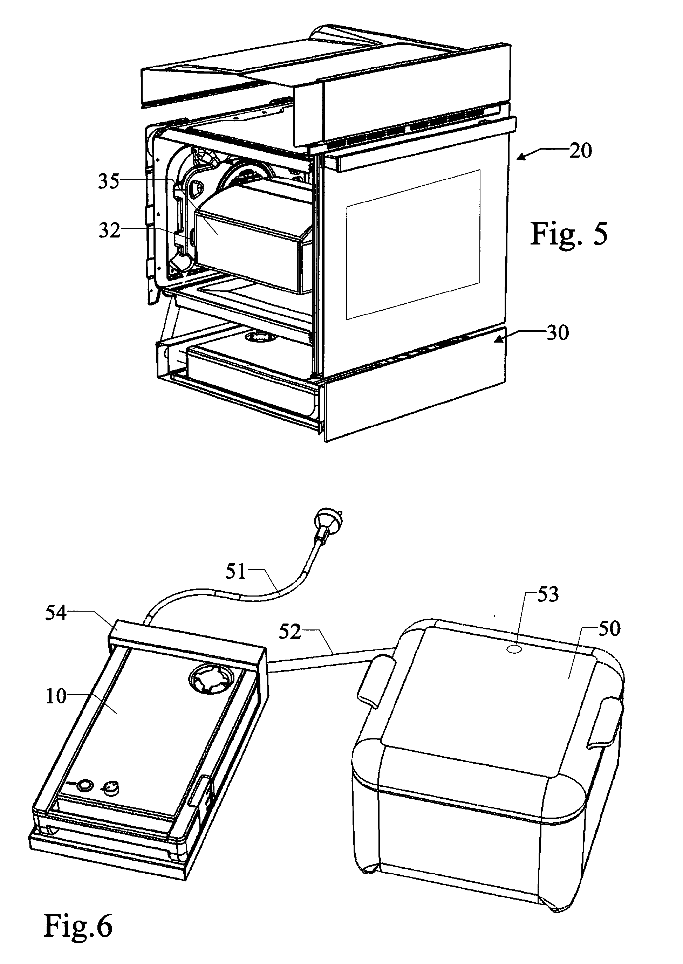

Figure 5 shows, connected to an oven, a steam generator accessory drawer which can be suitably connected to the oven interior containing a heat resistant dish for steam cooking, in accordance with the present invention;
Figure 6 shows a generator connected to a heat resistant dish for steam cooking, according to the present invention;

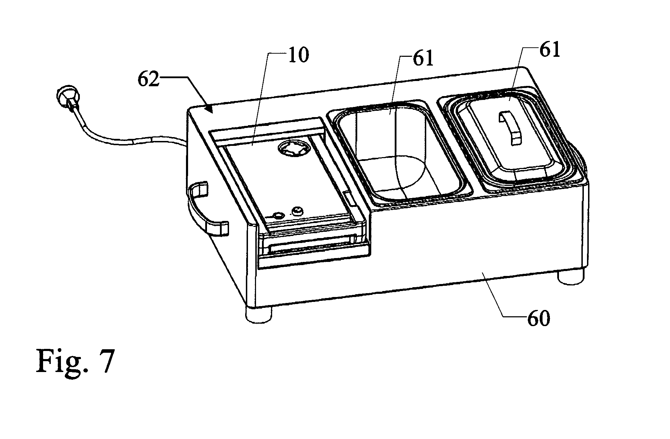

Figure 7 shows a steam generator connected to an accessory for free and/or supported installation which in accordance with the present invention can be used for steam cooking food.

With reference to the accompanying figures, a steam generator 10 comprises a container 11 accommodating the water reservoir and the electrical water heating system, formed in known manner.

The steam generation control system is also accommodated in the container 11.

On the outside of the top of the container 11 there are a stopper for the water reservoir, a switch 13 for activating the steam generator 10, and a steam regulator 14 enabling the delivered steam quantity to be regulated.

On the rear of the container 11 there is an electrical connector 15 of the type used for circular electric kettles, or another performing the same function, for the connection of which the poles do not have to be aligned, as in a normal plug, to hence facilitate the connection.

The connector 15 is used to electrically power the steam generator 10.

Again on the rear of the container 11 a hydraulic connector 16 of quick-connect type is provided.

The connector 16 is used to deliver the steam to the relative user devices, possibly via an extension pipe. The user device will be fitted with a connector similar to the connector 16.

A transparent window 17 enables the water quantity present to be seen, unless a different water level measuring system is used.

An oven 20, of traditional type for using the steam generator 10, must be fitted with a pipe 21 passing from the outside to the inside of the oven, into the oven muffle. At its outer end the pipe 21 must be able to be connected to the connector 16 either directly or via an extension pipe.

The pipe 21 can be fitted during the oven manufacture or can be installed on already operating ovens if these are provided with suitable openings closed by easily removable mechanical means.

An oven 20 can have, for example below it, an accessory, known as a multifunctional drawer 30, where the steam generator 10 can be positioned.

The multifunctional drawer 30 is shown below the oven, but there is nothing to prevent the drawer from being installed in different positions preferably adjacent to the oven.

The multifunctional drawer 30 is completely removable and can accommodate further food heating or simply allow storage.

Two connectors 31 are positioned on the vertical end wall of the drawer 30 to receive and removably cooperate with the connectors 15 and 16.

External to said drawer 30 there are an extension pipe 32 which connects the steam connector 31 to the pipe 21, and an electric current supply cable.

On opening the drawer 30 the steam generator 10, being fixed to the drawer 30, becomes disconnected from the connectors 31, and can be extracted, for example to supply the reservoir with further water.

The steam produced by the generator is transferred via the connection pipe directly into the oven muffle.

The walls being of stainless steel and the door being provided with a non-drip edge enable cooking to take place directly within the muffle.

According to a further embodiment, preferably for ovens with an enamelled muffle, the steam is transferred via a removable connection pipe 36 into a heat resistant dish 35, which retains it and limits its effect.

By virtue of the connectors 15 and 16 the steam generator can be considered a modular element and hence usable for other purposes.

For example the steam generator 10 can be connected to a heat resistant dish 50 suitable for the purpose, which is outside the oven. Both can be positioned for example on the kitchen worktop.

The steam generator 10 in this case is positioned in a suitable holder 54 by which electric power is provided via an electric cable 51 connected to the connector 15, with connection to the heat resistant dish 50 via an extension pipe 52 which connects the connector 16 to a similar connector 53 positioned on the heat resistant dish 50.

On one side the holder 54 comprises connectors for receiving and cooperating with the connectors positioned on the steam generator 10, and on the other outer side comprises the connectors for receiving and cooperating with those of the cable 51 and of the extension pipe 52.

The steam generator 10 can also be used combined with a freely positioned food cooking/heating accessory 60 comprising one or more trays 61, which can be used either on the kitchen worktop, or directly on the table, or carried by a suitable trolley which enables the food to be cooked, temperature-maintained and served directly close to the table.

The cooking unit 60 comprises a housing 62 into which the generator 10 is inserted. The housing 62 comprises the connectors for cooperation with the connectors 15 and 16 of the generator 10. A cable to the rear of the food heater 60 electrically powers the steam generator. The steam is withdrawn from the connector 15 through suitable pipes and is fed to the trays 61.

An advantage of the steam generator of the present invention is that it transforms a traditional oven into a steam oven. By installing it in combination with an oven it makes available a flexible product able to perform both as a traditional oven and as a steam oven.

A traditional oven can hence be adapted for use with the steam generator by simple and economical additions without compromising the normal cooking functions or the normal usable volume.

Another advantage of the generator is to be able to independently control steam delivery, either as a single cooking function, or combined with the normal coking functions controlled by the traditional control members present on the oven.

The steam generator can also be used for the most varied uses, as already described.

After use when reinserted into its drawer, it again becomes an integral element of the kitchen. In this respect, the multifunctional drawer which houses it can also operate as a food or plate heater to maintain already cooked dishes at the correct temperature or to heat plates prior to serving the food.

The two products can be connected together either on initial installation or subsequently when the requirement for this type of healthy cooking arises.

The steam generator offers further advantages, such as the facility to top-up the boiler with water without interrupting food cooking by momentarily extracted and filling the generator. Moreover after cooking, by completely extracting the generator excess water can be totally removed, the boiler be cleaned, and deposited limestone residues be removed. All this is achieved without penalizing the oven capacity and functionality.

## Claims

**1.** A steam generator comprising a boiler; a water reservoir; electric heating means for said water; electric powering means for said heating means; and delivery means for said steam; **characterised in that** said electric powering means comprise a connector arranged such that it can be removably connected to the electricity supply, said delivery means for said steam comprising a connector arranged such that it can be removably connected to means using said steam; all such that said steam generator is completely removable.

**2.** A steam generator as claimed in claim 1, **characterised in that** said means using said steam comprise an oven.

**3.** A steam generator as claimed in claim 1, **characterised in that** said means using said steam comprise an accessory for steam cooking.

**4.** A steam generator as claimed in claim 1, **characterised in that** said means using said steam comprise a multifunctional accessory with cooking or food heating functions.

**5.** A steam generator as claimed in claim 1, **characterised in that** said generator comprises electrical control means for said generator.

**6.** A steam generator as claimed in claim 2, **characterised in that** said oven comprises a pipe passing from the outside to the inside of said oven.

**7.** A steam generator as claimed in claim 6, **characterised in that** said through pipe comprises on the outside a connector able to be removable connected to an extension pipe.

**8.** A steam generator as claimed in claim 7, **characterised in that** said delivery means for said steam comprise an extension pipe for connecting said connector of said steam delivery means to said connector positioned on said through pipe.

**9.** An oven comprising a steam generator according to claim 1.

**10.** An oven as claimed in claim 9, **characterised by** comprising a pipe connecting the interior of said oven to said steam delivery means.

**11.** An oven as claimed in claim 9, **characterised by** comprising a drawer positioned below said oven, said steam generator being positioned in said drawer.
